# EUROPEAN PATENT SPECIFICATION

(11) **EP 0 736 165 B1**
(45) Date of publication and mention of the grant of the patent: **01.08.2001**
(21) Application number: 95903868.8
(22) Date of filing: 21.12.1994
(51) Int. Cl.: F41B 3/02, A01K 97/02

(54) **APPARATUS FOR CASTING BAIT FOR FISH**
EINRICHTUNG ZUM WERFEN VON FISCHKÖDERN
DISPOSITIF DE LANCEMENT D'APPATS POUR POISSONS

(30) Priority: 22.12.1993 GB 9326163; 06.07.1994 GB 9413623
(43) Date of publication of application: 09.10.1996
(73) Proprietor: ODGER, Barry James William, Near Braintree, Essex CM7 8EE (GB)
(72) Inventor: ODGER, Barry, James, William, Near Braintree Essex CM7 8EE (GB); HEMMINGS, Barry, Edward, Essex CM15 9LD (GB)
(74) Representative: Jones, Graham H.
(86) International application number: GB9402781
(87) International publication number: WO9517638

(56) References cited:
- GB-A- 2 185 692
- US-A- 2 345 043
- US-A- 3 857 379
- US-A- 4 127 956

## Description

This invention relates to apparatus for casting bait for fish.

It is well known for anglers to cast bait for fish. The bait is cast over an area at which an angler is fishing in the hope that fish will be attracted to the area and will then be able to be caught. When an angler is casting the bait a substantial distance, for example 10 - 30 metres, the casting of the bait by hand may not be satisfactory. More specifically, it may not be possible for the angler to cast the bait for the required distance and/or it may not be possible for the angler to cast the bait with the required accuracy.

In order to overcome the above problem, it is known to cast bait using a conventional catapult. The use of the catapult can give the desired casting range. However, aiming with the catapult is not easy and often the required accuracy is not achieved. Also, an angler needs to use two hands to operate the catapult and this can be a disadvantage because the angler may need to be holding his or her fishing rod in order to be ready to strike if a fish bites. Still further, the elastic bands of a catapult tend to become entangled after each firing use. Still further, certain types of non-solid bait such for example as maggots do not fit easily into a catapult pouch and this tends to make the use of the catapult awkward.

In GB-A-2185692 there is disclosed apparatus for casting bait for fish. This apparatus is intended to overcome the above mentioned problems associated with the hand casting of bait and also associated with the use of a catapult. The apparatus disclosed in UK-A-2185692 comprises an elongate body portion, receptacle means for receiving the bait, and resilient means in the form of elastic bands for use in causing the apparatus to fire the bait towards a desired location. The apparatus as shown in the drawings of UK-A-2185692 is such that the elastic bands are fixed to a piston which slides along the body portion. When the elastic bands are stretched and then released, the piston slides at speed along the body portion and strikes the receptacle means. The receptacle means is fixed and the bait is thrown out of the receptacle means due to a transfer of energy from the piston to the receptacle means. The apparatus does not work well in practice because the sliding piston is not able efficiently to transfer its energy to the fixed receptacle means. The result is that bait in the receptacle means tends simply to fall out of the receptacle means and it is not possible to cast the bait for any appreciable distances. Thus whilst the apparatus of GB-A-2185692 can be operated with one hand in a simpler manner than a catapult, it is not satisfactory insofar as it does not enable an angler to cast bait for the required distances.

In GB-A-2185692 there is an alternative disclosure of the piston being in the form of a cup for receiving the bait. The piston then acts as the receptacle means but it is in the elongate body portion. Live bait such as maggots escaping from the piston would clog up the inside of the body portion and stop the piston sliding in the body portion.

It is an aim of the present invention to obviate or reduce the above mentioned problems.

Accordingly, the present invention provides apparatus for casting bait for fish, which apparatus comprises an elongate body portion, receptacle means which is for receiving the bait and which is slidably mounted on the body portion, and resilient means for causing the receptacle means to slide along the body portion in a forwards direction and at such a rate that during use of the apparatus the bait is projected out of the receptacle means and towards a desired location, characterised in that the receptacle means is positioned outside of the body portion.

The apparatus of the present invention is able to be operated accurately and with one hand. Still further, the apparatus of the present invention is able to cast bait for required distances because the receptacle means is slidably mounted on the body portion. This slidable mounting of the receptacle means on the body portion enables the receptacle means to operate at the required speed to achieve casting of the bait at a variety of required distances. Thus the apparatus of the present invention is able to afford the advantages of ease of use and accuracy of casting over the use of a conventional catapult, and it is also able to afford the advantage of being able to cast over distances which are substantially in excess of those achievable with the apparatus of the United Kingdom Patent No. 2185692.

The receptacle means is preferably mounted on a carriage portion which slides on an outside part of the body portion. If desired, the receptacle means may be mounted in other ways, for example on a carriage portion on an inside part of the body portion, the actual receptacle means then still being positioned outside of the body portion.

The apparatus of the present invention preferably includes abutment means on the body portion for suddenly stopping movement of the receptacle means along the body portion. The use of the abutment means helps to facilitate the bait swiftly and cleanly leaving the receptacle means and it thus helps to enable the bait to be cast over long distances.

The receptacle means preferably comprises a receptacle portion for receiving the bait, and a carriage portion for sliding along the body portion. The receptacle portion preferably extends outwardly and forwardly of the carriage portion. Such a receptacle portion may be in the form of a curved scoop for easy use.

The carriage portion may include grip means for use in moving the carriage means inwardly against force from the resilient means. The grip means may be any suitable and appropriate type of grip means, for example a ribbed thumb grip portion.

The body portion will usually be a tubular body portion. The tubular body portion will usually be a hollow tubular body portion.

The resilient means will usually be a resilient elastic means. The resilient elastic means will usually be made of rubber. The rubber may be any suitable and appropriate type of rubber including natural rubber and synthetic rubber. If desired, the resilient means may be a spring. The spring may be made of metal or a plastics material.

The apparatus may be one in which the resilient means is anchored at a first end portion to the body portion, and a second end portion to the receptacle means.

The resilient means may comprise a pair of resilient portions which extend along opposite side portions of the body portion.

The apparatus may include a knob portion at one end of the body portion, the knob portion being such as to enable the apparatus to be pressed against an angler's body whilst the receptacle means is being moved along the body portion against force from the resilient means. The knob portion thus facilitates one handed priming of the apparatus prior to firing of the apparatus to cast the bait.

The present invention also extends to the combination of the apparatus of the invention and at least one loading tray for containing the bait for the receptacle means.

The apparatus of the invention can be held by an angler in one hand and the receptacle means filled with bait by a simple scooping action. Alternatively, with certain types of bait such for example as live maggots, the apparatus can simply be laid in the loading tray and the bait will crawl into the receptacle portion to self-load the receptacle portion.

The loading tray preferably has an inclined base such that the loading tray has a shallow end and a deep end. The use of such an inclined base facilitates one handed loading of the receptacle means with a scooping motion.

The combination may include an upstanding end wall with a recessed portion for receiving the body portion of the apparatus when the apparatus is in the loading tray. Thus the apparatus can easily be located in the loading tray ready for immediate use.

The loading tray may include mounting means for mounting the loading tray in a ready-to-use position. If it is desired to mount the loading tray at an elevated position on a bank, then the mounting means may be a bank stick. If it is desired to rest the tray on a hard surface, then the mounting means may be a free-standing end support for supporting one end of the loading tray.

The loading tray may be mounted in a mounting frame such that the loading tray is removable from the loading frame for ease of storage and/or cleaning.

Preferably there are two of the loading trays. A single loading tray or more than two loading trays may however be employed.

Embodiments of the invention will now be described solely by way of example and with reference to the accompanying drawings in which:
Figure 1 shows first apparatus for casting bait for fish, the apparatus being shown in use;
Figure 2 is an enlarged view of the apparatus shown in Figure 1;
Figure 3 is a side view showing in more detail the right hand end of the apparatus as shown in Figure 2;
Figure 4 is a section through the apparatus shown in Figure 2 and shows the right hand end of the apparatus;
Figure 5 shows second apparatus for casting bait for fish;
Figure 6 shows third apparatus for casting bait for fish;
Figure 7 shows fourth apparatus for casting bait for fish;
Figure 8 is a side view showing in more detail the right hand end of the apparatus as shown in Figure 7;
Figure 9 is a a section through the apparatus shown in Figure 7 and shows the right hand end of the apparatus;
Figure 10 shows fifth apparatus for casting bait for fish;
Figure 11 shows sixth apparatus for casting bait for fish;
Figure 12 shows seventh apparatus for casting bait for fish;
Figure 13 shows the apparatus of Figures 1 - 4 resting in one of a pair of loading trays shown in Figure 1;
Figure 14 is a section through Figure 13 and illustrates how the loading trays are mounted on a bank stick; and
Figure 15 illustrates how one of the loading trays may be mounted on a free-standing end support instead of on a bank stick.

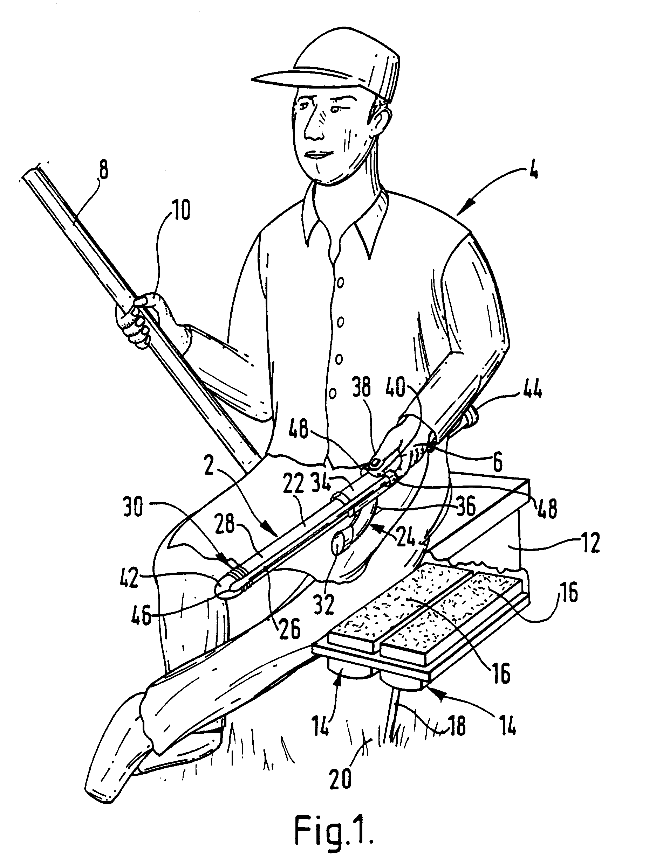

Referring to Figure 1, there is shown apparatus 2 for casting bait for fish. The apparatus 2 is shown being used by an angler 4 who is holding the apparatus 2 in his left hand 6 and who is holding a fishing rod 8 in his right hand 10. The angler 4 is seated on a box 12. A pair of loading trays 14 containing bait 16 are mounted on a bank stick 18. The bank stick 18 is pushed into a bank 20.

The apparatus 2 comprises an elongate body portion 22 and receptacle means 24 is for receiving the bait. The receptacle means 24 is slidably mounted on the body portion 22. The apparatus 2 still further comprises resilient means 26 for causing the receptacle means 24 to slide along the body portion 22 in a forward direction (that is away from the angler 4) and at such a rate that during use of the apparatus 2, the bait is projected out of the receptacle means 24 and towards a desired location.

As can be seen from Figure 1, the apparatus 2 can be used by the angler 4 with one hand. This enables the angler 4 continuously to hold his fishing rod 8 in the other hand. Thus the angler 4 is always ready to strike if a fish should bite. It will also be appreciated from Figure 1 that the apparatus 2 is easy to aim so that the bait can be cast with considerable accuracy. As will be explained in more detail hereinbelow, the sliding action of the receptacle means 4 along the body portion 22 enables the bait to be cast at considerable distances from the angler 4.

The receptacle means 24 is slidably mounted on an outside part 28 of the body portion 22. The body portion has abutment means 30 for suddenly stopping movement of the receptacle means 24 along the body portion 22. The abutment means 30 causes the receptacle means 24 suddenly to come to a stop and this in turn causes the bait swiftly to be projected out of the receptacle means 24 and towards the desired location for the bait.

The receptacle means 24 comprises a receptacle portion 32 for receiving the bait, and a carriage portion 34 for sliding along the body portion 22. The carriage portion 34 slides over the outside part 28 of the body portion 22. The receptacle portion 32 has a curved arm portion 36 which connects to the carriage portion 34 such that the receptacle portion 32 extends outwardly and forwardly of the carriage portion 34. The curved arm portion 36 enables the apparatus 2 to be used like a scoop so that the curved arm portion 36 is able to be dug into the bait 16 in one of the loading trays 14 and bait: scooped into the receptacle portion 32. Alternatively, with live bait such as maggots, the apparatus 2 can simply be laid in one of the loading trays 14 and the bait will crawl into the receptacle portion 32 to self-load the receptacle portion 32. Thus filling of the receptacle portion 32 with bait 16 is easily achieved.

When the receptacle portion 32 has been filled with bait 16, then the receptacle means 24 is pulled rearwardly along the body portion 22. This is easily effected as shown in Figure 1 by the angler 4 placing his thumb 38 of the left hand 6 on grip means 40. The grip means 40 is a ribbed portion as shown and it provides a good grip for the thumb 38.

The body portion 22 is a hollow tubular body portion 22. One end of the body portion 22 is closed by a cap 42. The other end of the body portion 22 is closed by a knob portion 44. As the receptacle means 24 is being drawn back along the body portion 22 by the angler 4, the knob portion 44 may advantageously be positioned to rest against the angler's body in order to give a base against which to pull on the receptacle means 24.

The cap 42 is provided with a pair of apertures 46 and the resilient means 26 passes through the apertures 46. Thus the cap 42 forms an anchor point at a first end portion of the body portion 22. The resilient means 26 is then connected to a pair of lugs 48 which extend outwardly from either side of the grip means 40 as shown.

The resilient means 26 is a resilient elastic means formed by a length of elastic material such as rubber. The elastic material passes through the apertures 46 and is anchored at its ends in the lugs 48. Thus the elastic material extends as two strips which extend along opposite side portions of the body portion 22. The two lengths of elastic material give a strong even pull on the receptacle means 24 for causing it to travel speedily along the body portion 22 when the angler 4 releases his thumb 38 from the position shown in Figure 1.

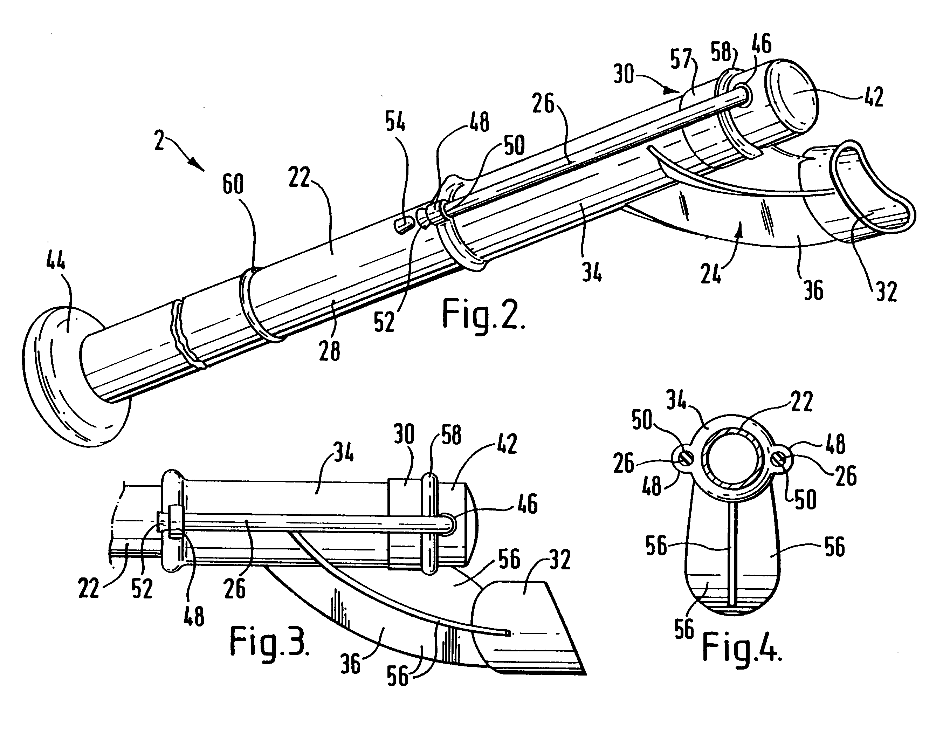

Figures 2, 3 and 4 illustrate how the resilient means 26 is connected to the lugs 48. More specifically the resilient means 26 passes through apertures 50 in the lugs 48. The resilient means 26 is then outwardly splayed at its ends 52. A bung 54 is then pushed into each outwardly splayed end 52 with the bung 54 then locating in one of the apertures 50 and with the end 52 being sandwiched between the bung 54 and the lug 48.

Figure 4 illustrates how the curved arm portion 36 is formed with curved web portions 56.

Figures 2 and 3 illustrate how the abutment means 30 is formed of a short tube 57 of a resilient material which abuts against an increased diameter shoulder portion 58 on the body portion 22. The tube 30 may be made of a resilient material such for example as rubber or neoprene. The tube 57 is able suddenly to stop the forwards motion of the receptacle means 24 without causing excessive jarring along the apparatus 2.

The body portion 22 is provided with travel limiting means in the form of a resilient ring 60. The ring 60 can be rolled along the body portion 22 to any desired position at which it will act to limit the rearwards travel of the receptacle means 24 as it is pulled rearwardly by the angler 4. The position of the ring 60 may be used to help to determine the distance that the receptacle means 24 needs to be pulled back along the body portion 22 in order to cast the bait for a desired distance. If desired, the body portion 22 can be provided with distance markings for indicating where the ring 60 should be located for achieving casts of different distances.

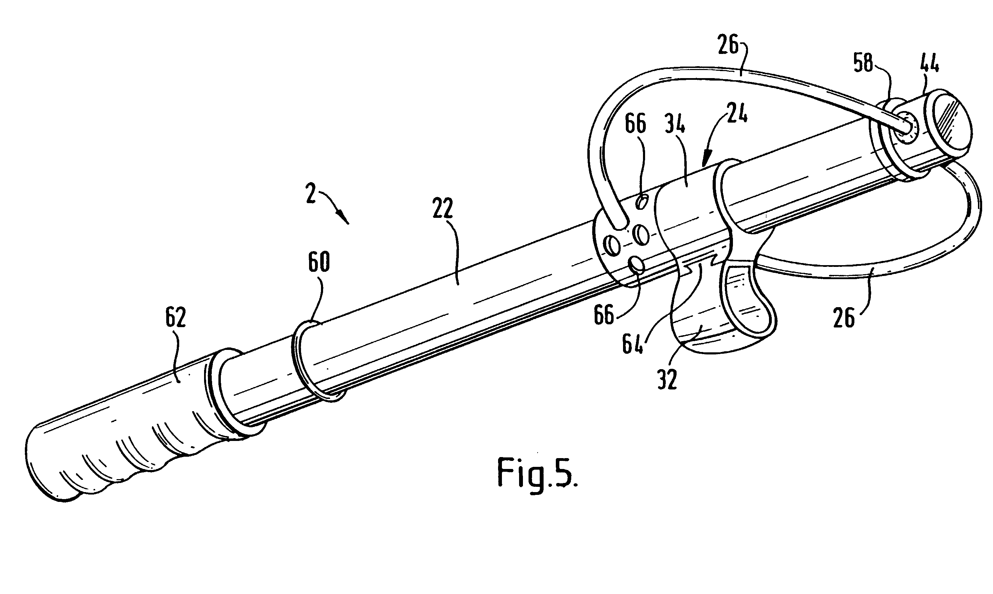

Referring now to Figures 5 - 11, there are shown different types of apparatus 2 for casting bait for fish. Similar parts as in Figures 1 to 4 have been given the same reference numerals for ease of comparison and understanding.

Figure 5 shows second apparatus 2 for casting bait for fish. It will be seen from Figure 5 that the knob portion 44 has been replaced by a handle 62. The receptacle means 24 shown in Figure 5 is differently shaped from the receptacle means 24 shown in Figures 1 to 4. In Figure 5, the receptacle portion 32 is moulded with a continuously curved wall instead of the web portions 56. Also, the receptacle portion 32 is not formed as an integral part of the carriage portion 34 but is connected thereto by a dove tail joint 64. The joint 64 enables the receptacle portion 32 to be removed from the carriage portion 34 and this may be advantageous for using different types and sizes of receptacle portion 32 with the same carriage portion 34.

In Figure 5, the carriage portion 34 abuts directly against the shoulder portion 58. Thus in Figure 5 it is just the shoulder portion 58 which forms the abutment means.

In Figure 5 it will be seen that the carriage portion 34 is provided with finger indent portions 66. These finger indent portions 66 enable the receptacle means 24 to be gripped for rearward pulling along the body portion 22 and they may be used instead of the grip means 40 shown in Figure 1.

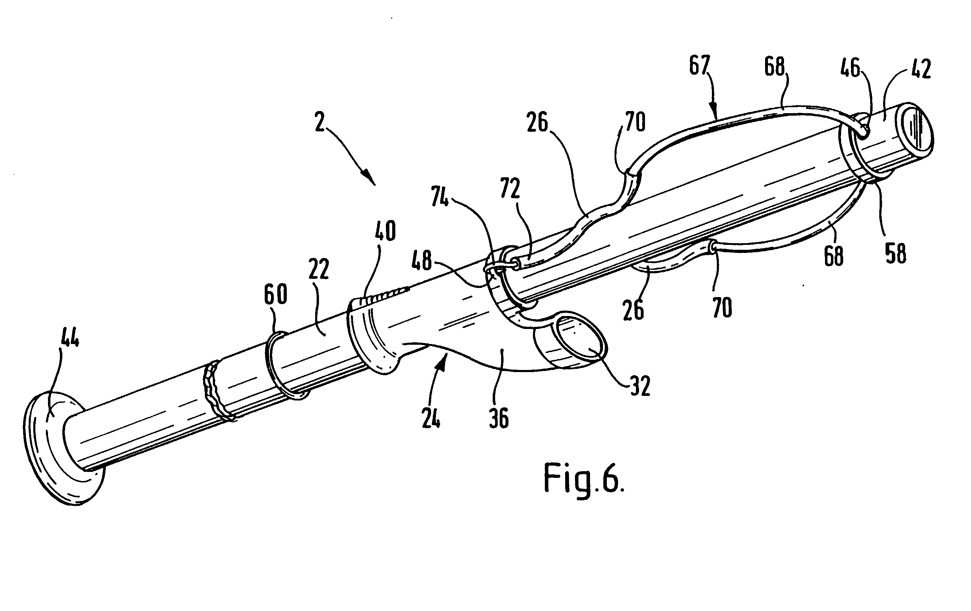

Figure 6 shows third apparatus 2 for casting bait for fish. In Figure 6 the receptacle means 24 is again somewhat differently shaped from that shown in previous Figures. Also, the apparatus 2 has a curved steel member 67 which passes through the apertures 46 in the cap 42 such that the apparatus 2 has two arms 68. The resilient means 26 is attached to ends 70 of the arms 68 as shown. Ends 72 of the resilient means 26 are provided with hooks 74 which locate over the lugs 48 as shown. The anchor point for the resilient means 26 is at the ends 70. When the apparatus 2 is fired, the receptacle means 24 moves past the ends 70 towards the shoulder portion 58. If the resilient means 26 is long enough, then the receptacle means 24 will strike the shoulder portion 58. If the resilient means 26 is short enough, then the resilient means 26 will stop the movement of the receptacle means 24 before it reaches the shoulder portion 58.

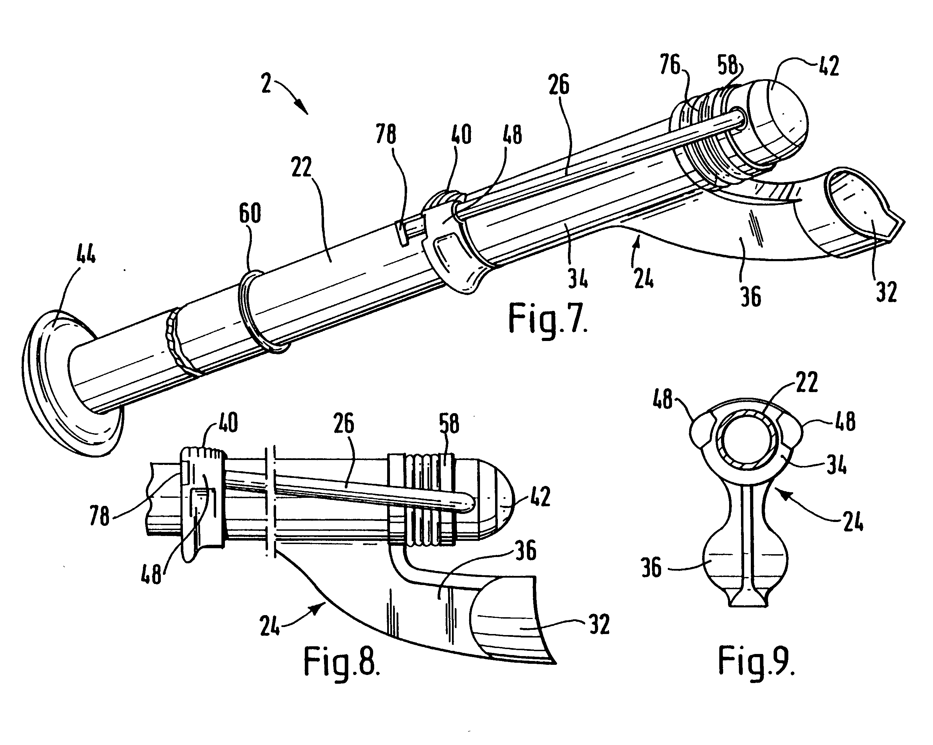

Figures 7, 8 and 9 show fourth apparatus 2 for casting bait for fish. In Figures 7, 8 and 9 a plurality of rings 76 made of a resilient material are used instead of the tube 57. Also, the resilient means 26 is provided with T-bar ends 78 for enabling the resilient means 26 to be fixed with respect to the lugs 48.

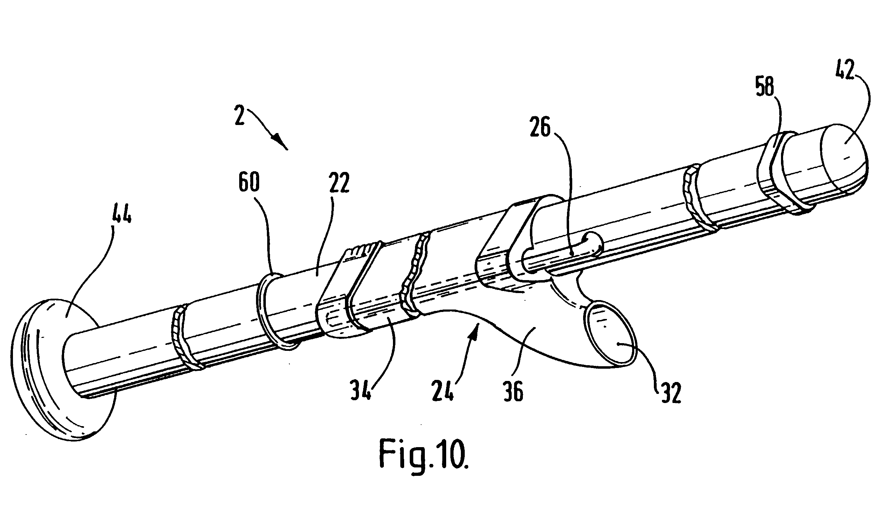

Figure 10 shows fifth apparatus 2 for casting bait for fish. In Figure 10, the apparatus 2 is such that the resilient means 26 passes along the inside of the receptacle means 24 as shown instead of outside of the receptacle means 24 as in previous Figures. The resilient means 26 is anchored at apertures 79. When the receptacle means 24 is pulled back and released, the receptacle means 24 will move past the apertures 79 in the manner described above for Figure 6. The length of the resilient means 26 can be used to control whether or not the receptacle means 24 strikes the shoulder portion 58.

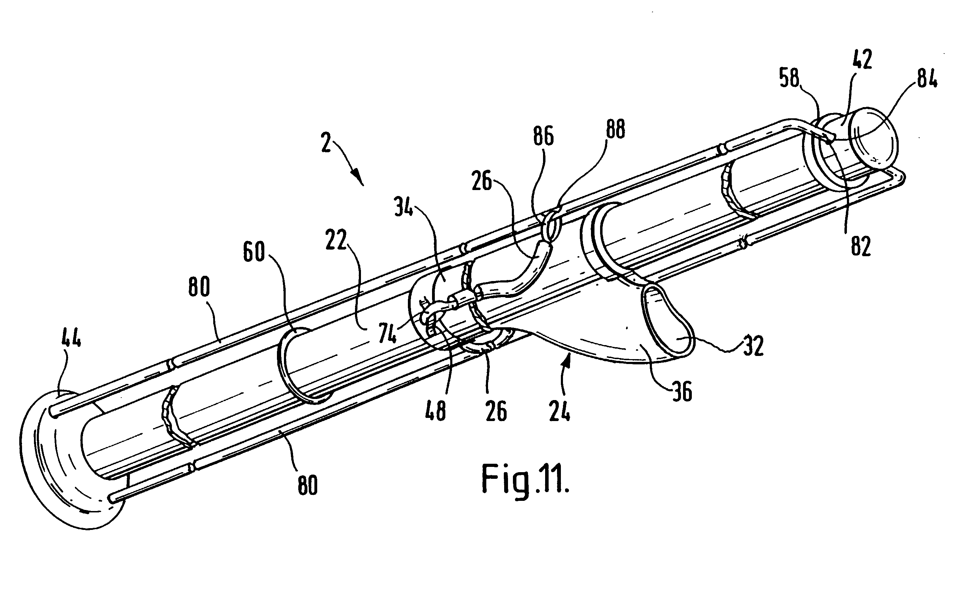

Figure 11 shows sixth apparatus 2 for casting bait for fish. The apparatus 2 shown in Figure 11 is such that two rod members 80 extend as shown between the cap 42 and the knob portion 44. The rod members 80 may be separately formed or they may be joined at an end portion 82 which passes through apertures 84 in the cap 42. The resilient means 26 is provided with a hook member 86 for fitting in a slot 88 or otherwise fitting to the rod members 80 as shown. Thus the rod members 80 form anchor means for anchoring one end of the resilient means 26 at the slots 88. When the apparatus 2 is fired, the receptacle means 24 will move past the slots 88 towards the shoulder portion 58, similarly as described above for Figures 6 and 10.

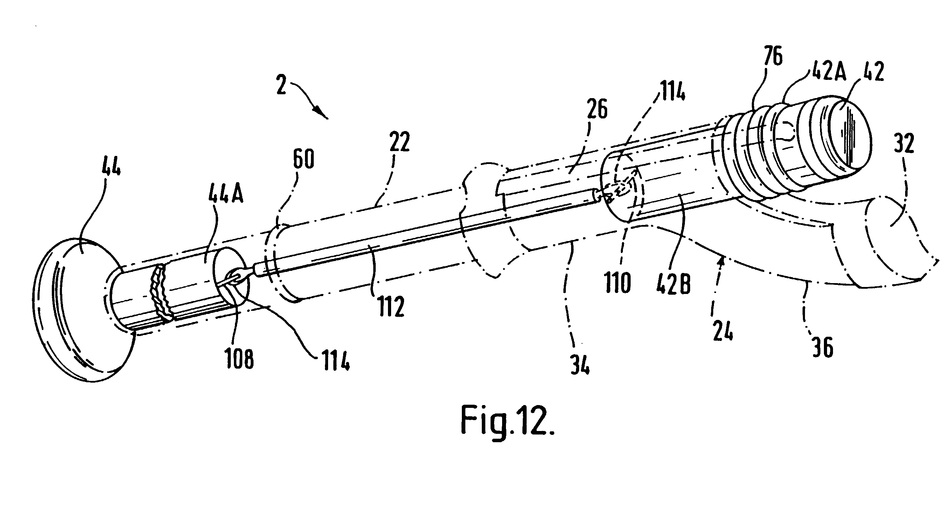

Referring now to Figure 12, there is shown seventh apparatus 2 for casting bait for fish. The profile of the apparatus 2 shown in Figure 12 is similar to the profile of the apparatus 2 shown in Figure 7 - 9. In Figure 12, for simplicity of illustration, this profile has been shown in broken lines. This enables Figure 12 to show that the knob portion 44 has an extension part 44A which extends into the body portion 22. Also, the cap 42 is formed as shown with a bead part 42A and an extension part 42B. An anchor pin 108 extends across the extension part 44A as shown. An anchor pin 110 extends across the extension part 42B as shown.

The apparatus 2 has auxiliary resilient means 112 which may be constructed of the same material as the resilient means 26. The auxiliary resilient means 112 has a hook member 114 at each end in order to secure the auxiliary resilient means 112 to the anchor pins 108, 110. When the receptacle means 24 is pulled back and then the apparatus 2 is fired, the receptacle means 24 is moved speedily along the body portion 22 as described above in order to fire the bait. At the end of its travel, the receptacle means 24 will strike the rings 76. The rings 76 can be separate rings or made as one single member. As the receptacle means 24 strikes the rings 76 it will knock the cap 42 forwardly against the resilient force of the auxiliary resilient means 112. Thus, when the receptacle means 24 strikes the rings 76, it will not strike as hard as it would normally do if the cap 42 were fixed in position, for example with the extension part 42B glued in position inside the body portion 22. The controlled forward movement of the cap 42 helps to take any jarring out of the apparatus 2 caused by the receptacle means 24 striking against fixed abutment means. The auxiliary resilient means 112 quickly brings the cap 42 back to its seated position as shown in Figure 12 after the apparatus 2 has been fired and the receptacle means 24 has struck the cap 42.

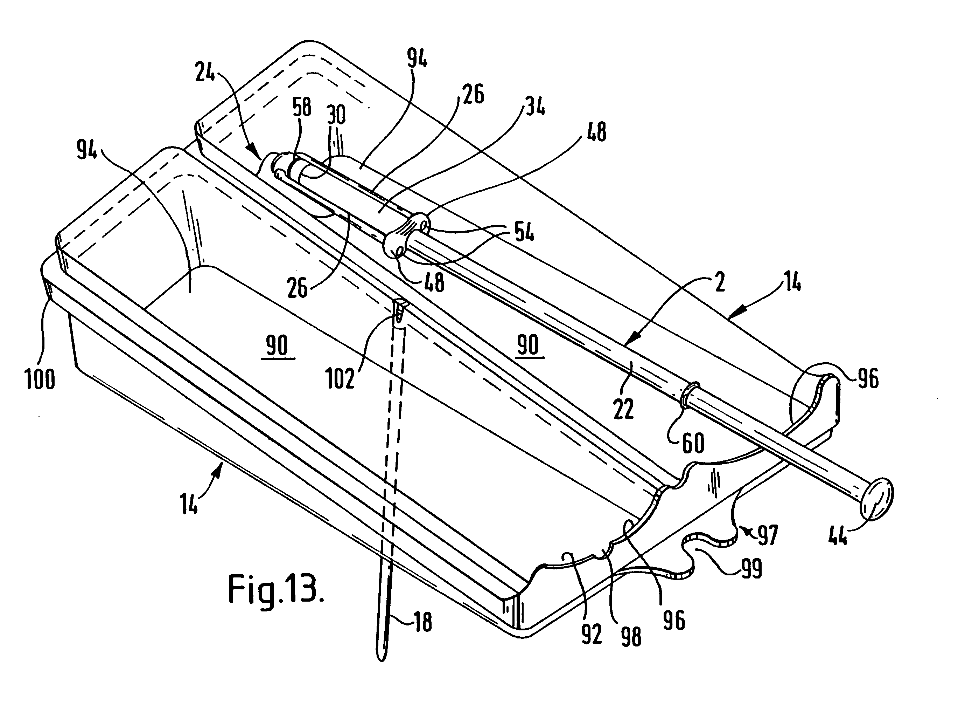

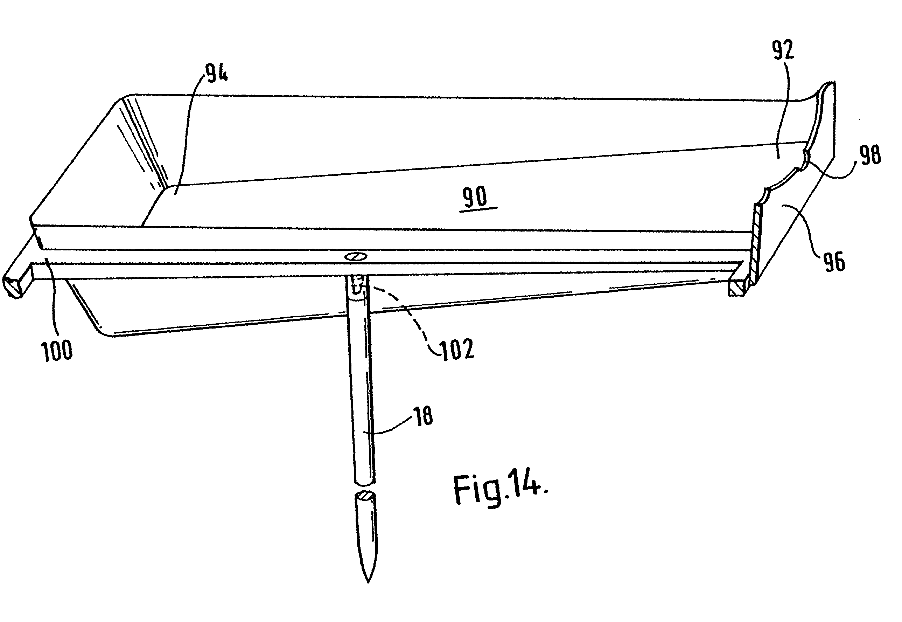

Referring now to Figures 13 and 14, the apparatus 2 is shown resting in one of the loading trays 14. As can be seen, the loading trays 14 each have an inclined base 90 such that each loading tray 14 has a shallow end 92 and a deep end 94. The inclined base 90 thus facilitates one handed loading of the receptacle means by the angler 4.

The two loading trays 14 are a releasable fit in a mounting frame 100. The frame 100 has an upstanding end wall 96 which is provided with a recessed portion 98 for receiving the body portion 22 as shown in Figure 13. If it is not desired to lay the apparatus 2 in the tray 14 as shown in Figure 13, then the apparatus 2 may be mounted vertically by placing it in a holster member 97 having a receiving slot 99. As shown most clearly in Figure 14, a screw 102 passes through the frame 100, and the bank stick 18 is secured to the screw 102.

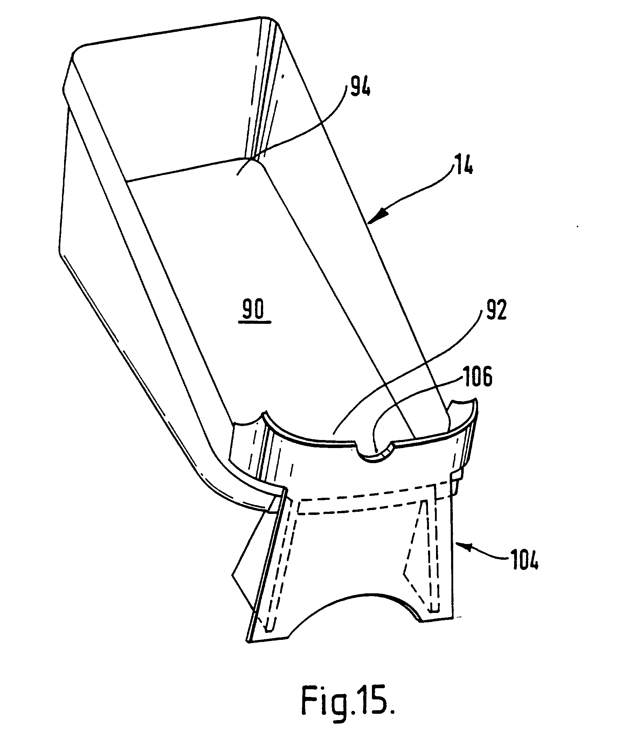

If a fishing area is not suitable for using a bank stick 18, then a loading tray 18 may be stood on a hard surface simply by using a free-standing end support 104 as shown in Figure 15. The end support 104 receives and supports one end of the loading tray 14. The end support 104 is provided with a recessed portion 106 for receiving the body portion 22 when the apparatus 2 is in the loading tray 14.

It is to be appreciated that the embodiments of the invention described above with reference to the accompanying drawings have been given by way of example only and that modifications may be effected. Thus, for example, the shape of the body portion 22 and the shape of the receptacle means 24 may be varied from that shown. Other types of resilient means 26 may be employed. The shape of the loading trays 14 and the holster member 97 may also be different from that shown. The apparatus 2 can be used at any suitable location where bait is required to be cast. The bait can be any type of bait used in fishing.

## Claims

1. Apparatus (2) for casting bait for fishing, which apparatus comprises an elongate body portion (22), receptacle means (24) which is for receiving bait and which is slidably mounted on the body portion (22), and resilient means (26) for causing the receptacle means (24) to slide along the body portion (22) in a forwards direction and at such a rate that during use of the apparatus (2) the bait is projected out of the receptacle means (24) towards a desired location, characterised in that the receptacle means (24) is positioned outside of the body portion (22).

2. Apparatus (2) according to claim 1 in which the receptacle means (24) is mounted on a carriage portion (34) which slides on an outside part of the body portion (22).

3. Apparatus (2) according to claim 1 or claim 2 and including abutment means (30) on the body portion (22) for suddenly stopping movement of the receptacle means (24) along the body portion (22).

4. Apparatus (2) according to claim 2 or to claims 2 and 3 in which the receptacle means (24) comprises a receptacle portion (32) for receiving the bait, and the carriage portion (34) for sliding along the body portion (22).

5. Apparatus (2) according to claim 4 in which the receptacle portion (32) extends outwardly and forwardly of the carriage portion (34).

6. Apparatus (2) according to claim 4 or claim 5 in which the carriage portion (34) includes grip means (40) for use in moving the carriage portion (34) rearwardly against force from the resilient means (26).

7. Apparatus (2) according to any one of the preceding claims in which the body portion (22) is a tubular body portion (22).

8. Apparatus (2) according to any one of the preceding claims in which the resilient means (26) is a resilient elastic means (26).

9. Apparatus (2) according to any one of the preceding claims in which the resilient means (26) is anchored at a first end portion to the body portion (22), and at a second end portion to the receptacle means (24).

10. Apparatus (2) according to any one of the preceding claims and including a knob portion at one end of the body portion (22), the knob portion being such as to enable the apparatus (2) to be pressed against an angler's side whilst the receptacle means (24) is being moved along the body portion (22) against force from the resilient means (26).

11. The combination of apparatus (2) according to any one of the preceding claims and at least one loading tray (14) for containing the bait for the receptacle means (24).

## Patentansprüche

1. Einrichtung (2) zum Werfen von Ködern zum Fischen, welche Einrichtung einen länglichen Körperbereich (22), Aufnahmeeinrichtungen (24), die zur Aufnahme von Ködern vorgesehen sind und die auf dem Körperbereich (22) gleitbar angebracht sind, und federnde Einrichtungen (26), um die Aufnahmeeinrichtungen (24) zu veranlassen, entlang des Körperbereichs (22) in einer Vorwärtsrichtung zu gleiten und mit einer solchen Geschwindigkeit, daß während der Verwendung der Einrichtung die Köder aus der Aufnahmeeinrichtung (24) zu einem gewünschten Ort hinausgeschleudert werden, dadurch gekennzeichnet, daß die Aufnahmeeinrichtungen (24) außerhalb des Körperbereichs (22) angeordnet sind.

2. Einrichtung (2) nach Anspruch 1, bei der die Aufnahmeeinrichtungen (24) auf einem Wagenbereich (34) angebracht sind, der auf einem äußeren Teil des Körperbereiches (22) gleitet.

3. Einrichtung (2) nach Anspruch 1 oder Anspruch 2, und Anschlageinrichtungen (30) auf dem Körperbereich (22) zum plötzlichen Anhalten der Bewegung der Aufnahmeeinrichtungen (24) längs des Körperbereiches (22) aufweisend.

4. Einrichtung (2) nach Anspruch 2 oder nach den Ansprüchen 2 und 3, in der die Aufnahmeeinrichtungen (24) einen Aufnahmebereich (32) zum Empfangen der Köder und den Wagenbereich (34) zum Gleiten längs des Körperbereiches (22) aufweisen.

5. Einrichtung (2) nach Anspruch 4, bei der der Aufnahmebereich (32) sich auswärts und vorwärts des Wagenbereichs (34) erstreckt.

6. Einrichtung (2) nach Anspruch 4 oder Anspruch 5, bei der der Wagenbereich (34) Greifeinrichtungen (40) zur Verwendung zum Bewegen des Wagenbereichs (34) rückwärts gegen Kraft von den federnden Einrichtungen (26) aufweist.

7. Einrichtung (2) nach irgendeinem der vorhergehenden Ansprüche, in der der Körperbereich (22) ein röhrenförmiger Körperbereich (22) ist.

8. Einrichtung (2) nach irgendeinem der vorhergehenden Ansprüche, in der die federnden Einrichtungen (26) federnde elastische Einrichtungen (26) sind.

9. Einrichtung (2) nach irgendeinem der vorhergehenden Ansprüche, in der die federnden Einrichtungen (26) an einem ersten Endbereich am Körperbereich (22) verankert sind, und an einem zweiten Endbereich an den Aufnahmeeinrichtungen (24).

10. Einrichtung (2) nach irgendeinem der vorhergehenden Ansprüche und aufweisend einen Knopfbereich an einem Ende des Körperbereiches (22), wobei der Knopfbereich so ausgebildet und angeordnet ist, daß er es ermöglicht, daß die Einrichtung (2) gegen eine Seite des Anglers gedrückt wird, während die Aufnahmeeinrichtungen (24) längs des Körperbereichs (22) gegen Kraft aus den federnden Einrichtungen (26) bewegt werden.

11. Die Kombination der Einrichtung (2) nach irgendeinem der vorhergehenden Ansprüche und mindestens eines Nachfüllkorbes (14) zum Enthalten der Köder für die Aufnahmeeinrichtungen (24).

## Revendications

1. Appareil (2) pour projeter des appâts pour la pêche, lequel appareil comprend une partie (22) formant corps allongé, un moyen (24) formant réceptacle qui sert à recevoir des appâts et qui est monté à coulissement sur la partie (22) formant corps, et un moyen à ressort (26) pour amener le moyen (24) formant réceptacle à coulisser le long de la partie (22) formant corps dans la direction avant et à une vitesse telle que lorsque l'appareil (2) est utilisé, les appâts sont projetés hors du moyen (24) formant réceptacle en direction d'un emplacement voulu, caractérisé en ce que le moyen (24) formant réceptacle est disposé à l'extérieur de la partie (22) formant corps.

2. Appareil (2) selon la revendication 1, dans lequel le moyen (24) formant réceptacle est monté sur une partie (24) formant chariot qui coulisse sur une partie extérieure de la partie (22) formant corps.

3. Appareil (2) selon la revendication 1 ou la revendication 2 et comprenant un moyen formant butée (30) sur la partie (22) formant corps pour interrompre brusquement le déplacement du moyen (24) formant réceptacle le long de la partie (22) formant corps.

4. Appareil (2) selon les revendications 2 et 3, dans lequel le moyen (24) formant réceptacle comprend une partie (32) formant réceptacle destinée à recevoir les appâts, et la partie (34) formant chariot destinée à coulisser le long de la partie (22) formant corps.

5. Appareil (2) selon la revendication 4, dans lequel la partie (32) formant réceptacle s'étend vers l'extérieur et vers l'avant de la partie (34) formant chariot.

6. Appareil (2) selon la revendication 4 ou la revendication 5, dans lequel la partie (34) formant chariot comprend un moyen de saisie (40) destiné être utilisé pour déplacer la partie (34) formant chariot vers l'arrière en opposition à la force exercée par le moyen à ressort (26).

7. Appareil (2) selon l'une quelconque des revendications précédentes, dans lequel la partie (22) formant corps est une partie (22) tubulaire formant corps.

8. Appareil (2) selon l'une quelconque des revendications précédentes, dans lequel le moyen à ressort (26) est un moyen élastique à ressort (26).

9. Appareil (2) selon l'une quelconque des revendications précédentes, dans lequel le moyen à ressort (26) est ancré par une première partie d'extrémité sur la partie (22) formant corps et par une deuxième extrémité sur le moyen (24) formant réceptacle.

10. Appareil (2) selon l'une quelconque des revendications précédentes, qui comprend une partie formant bouton à une extrémité de la partie (22) formant corps, la partie formant bouton permettant à l'appareil (2) d'être repoussé contre un flanc du pêcheur pendant que le moyen (24) formant réceptacle est déplacé le long de la partie (22) formant corps en opposition à la force exercée par le moyen à ressort (26).

11. Combinaison de l'appareil (2) selon l'une quelconque des revendications précédentes et d'au moins un plateau de chargement (14) destiné à contenir les appâts pour le moyen (24) formant réceptacle.
